# EUROPEAN PATENT APPLICATION

(11) **EP 1 208 747 A1**
(43) Date of publication of application: **29.05.2002**
(21) Application number: 00204119.2
(22) Date of filing: 21.11.2000
(51) Int. Cl.: A01K 15/04

(54) **Device, constructed as a set in varying sizes, for preventing cows kicking their hind legs**

(71) Applicant: Metal Inventions Holland BV, 7000 AK Doetinchem (NL)
(72) Inventor: Metal Inventions Holland BV, 7000 AK Doetinchem (NL)

(57) **Abstract**

The invention relates to a device for the prevention of animals kicking their hind legs, consisting of a set of various, curved and shaped kick bars made from one single piece, differing in size from each other and made from a somewhat flexible material able to fit on to any normal milking-cow and marked in such a way to make them easily identifiable.

Locally the pipe is shaped in such a way that a sturdy grip on the apparatus can be obtained.

## Description

This invention is an apparatus aiming to prevent restless milking-cows from kicking their hind legs so that the milking process can take place without being disturbed.
The apparatus consists of a round tube made with curved ends, one of which is placed in a slant above the udder in the cow's groin and the other is placed firmly over the cow's spinal chord. To be able to fit the kick bar to the cow, it is adjustable by way of a "click" system, also known as the "tent-pole" system.
A similar device has been on the market since around 1966 and is used by pretty well every dairy farmer throughout the world and is known in Holland under Patent Application no. 1013527.
However, the present models have the following disadvantages:
Every cow varies in size and is built differently. Considering the kick bar must fit precisely, it has to be continually adjusted to the right measurement after the right size has been judged. This is time consuming for the farmer and is sometimes unnecessarily irritating for the cow. Another disadvantage of the present kick bar is the rigid construction. The present kick bars do not made any allowance for the inevitable movements of cows. Following an error of judgement on the farmer's part when the kick bar is fitted too tightly, a cow may often become too tense. The rigid construction of the kick bar does not flex at all and thus causes the cow to exert herself, often losing her balance or otherwise injuring herself.
Yet another disadvantage of the present models is that the kick bar is often difficult to remove after milking. This is due to the round steel tube, the weight of it (about 1,9 kg.) and the farmer's more often than not wet hands. For ergonomic and economical reasons a round tube is used and a heavy weight is necessary to withstand its application.
As far as the farmer is concerned, he or she is usually standing in a lower position with respect to the cow and generally has wet hands due to the regular rinsing sessions. From this position he or she has to lift the kick bar upwards with all his or her might in one flowing movement and remove it with a twisting motion. The farmer could indeed opt for a kick bar renowned by the aforementioned Dutch Patent Application no. 1013527 but even with this kick bar its heavy weight plays an important role and the (somewhat large) spring catch is not always within reach when haste is necessary.
Another frequently reported problem is that the kick bar is often fitted upside down; this means that the short part intended to go underneath the cow is accidentally placed on the cow's back and the long part is then placed in the cow's groin. In order to block the cow sufficiently, the curved ends differ in length by approximately 3 cm. An entirely symmetrical kick bar would not hitch properly on the cow's back, hence the 3 cm. difference in one curved end which forms the upper part.
In practice, the kick bar is often fitted accidentally with the short part fitted on the back whereby, following the slightest movement, it falls off. In this way, the longer part (normally intended to go over the cow's back) pokes into the cow's belly causing the animal unnecessary irritation. This situation is mainly due to the fact that the two different parts are not easily identifiable. During the often hectic milking process the 3 cm. difference in length is just not obvious enough.
To avoid the situation described, the kick bar is often purposely fitted too loosely and does not therefore deter the cow from fidgeting, does not fulfil its purpose and in many cases is actually thrown off by the animal. A recurring problem which develops in time is the formation of too much tolerance of those parts that slide into each other as a result of premature wear and tear of the spring catch in the groove.
The spring construction as described in the Dutch Patent Application no. 1013527 and the use of rustproof materials intends to resolve a part of this problem but the (spring) construction is nevertheless the weakest link and liable to break.

The device aims to resolve the aforementioned disadvantages in the following way:

To avoid the time-consuming setting of the adjustable kick bar, it is made in one whole piece and not adjustable but supplied in various different sizes. Each size differs to such an extent that it is very easy to distinguish between them, i.e. by using clearly recognisable colours: size A is red, B is white, etc. After the farmer has estimated the cow's size at a glance, he can then determine the correct size required and the cow can be fitted in one single motion.

Thanks to the choice of a somewhat flexible material, the different kick bars never fail to fit any particular cow and simultaneously the problem of the rigid construction no longer exists. At the spot where the kick bar is gripped to fit on and take off the cow, it is constructed in such a way that even a sturdy grip with a wet hand is made possible, with the added bonus that it is then automatically picked up in the correct manner, the longest part being applied to the animal's back and the shorter part in its groin.

The invention is further illustrated with the help of the following design and construction diagrams.
A set of, for example, three kick bars (1), (2) and (3), each one constructed of one single tube having a longer upper part (4) and a slightly shorter lower part (5), supplied in three different sizes and in three different colours or with some other distinguishing marks.
The material (6) used to make the kick bar is somewhat flexible and its handle (7) is made in such a way that a sturdy grip is possible, enabling the kick bar to be always picked up and fitted in the correct manner.

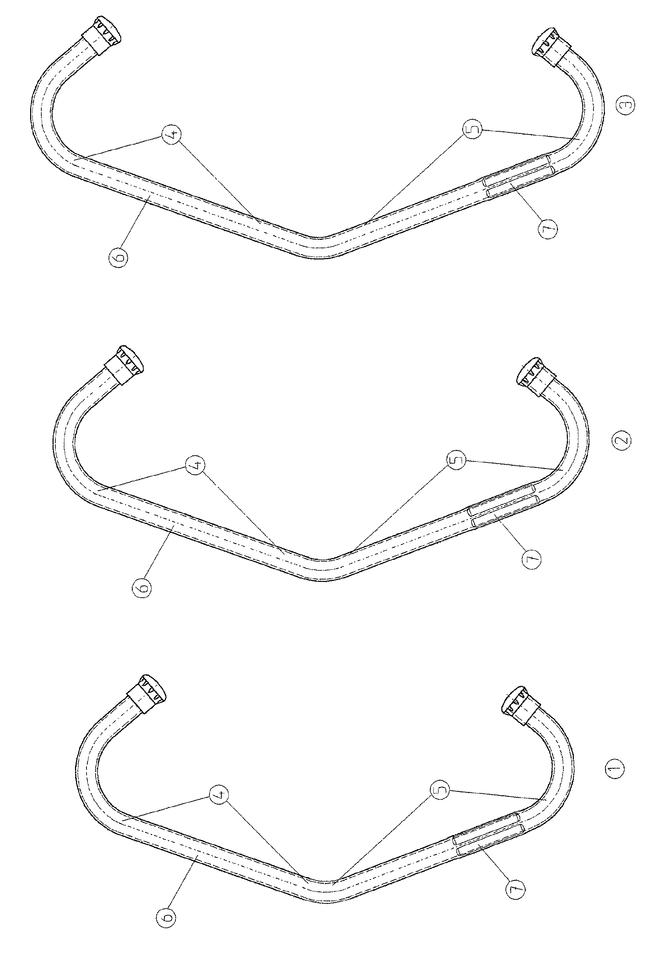

## Claims

1. Device for the prevention of cows kicking their hind legs having the characteristic that, in order to avoid wasting time adjusting the kick bar to fit each individual cow, it is constructed out of one piece of curved piping (6) but available in different sizes (1,2 and 4) varying from each other in appearance to enable the farmer to choose at a glance the right kick bar for each cow and fit it to the animal without any further intervention.

2. A device as described in claim 2 having the characteristic that the construction material chosen is so flexible that the device works with spring-like action, following the cow's movements and continually acting as a deterrent to the same and in this way better fulfills its purpose.

3. A device as described in claims 1 and 2 having the characteristic that it is equipped with a sturdy handle (7) so that a sturdy grip is possible and is positioned in such a way on the device that the kick bar will always be fitted to the animal in the correct manner, i.e. with the longer part (4) over the spinal chord and the shorter part (5) in the animal's groin.
